# EUROPEAN PATENT APPLICATION

(11) **EP 4 746 158 A1**
(43) Date of publication of application: **20.05.2026**
(21) Application number: 25745472.8
(22) Date of filing: 20.01.2025
(51) Int. Cl.: H01M 50/289, H01M 10/658, H01M 50/204

(54) **BATTERY PACK AND METHOD FOR MANUFACTURING SAME**

(30) Priority: 23.01.2024 KR 20240010445; 07.03.2024 KR 20240032767
(71) Applicant: LG Energy Solution, Ltd., Seoul 07335 (KR)
(72) Inventor: LIM, Chae Won, Daejeon 34122 (KR); CHOI, Jong Hwa, Daejeon 34122 (KR)
(74) Representative: Plasseraud IP
(86) International application number: PCT/KR2025/001041
(87) International publication number: WO 2025/159455

(57) **Abstract**

According to embodiments, a method of manufacturing a battery pack includes: placing a plurality of battery cell assemblies and an electrical component in a pack housing that includes a base plate, a center beam on the base plate, and first and second cross-beams, in which the center beam is perpendicular to each of the first and second cross-beams; and providing a fire-resistant coating on the plurality of battery cell assemblies by a painting method.

## Description

### [Technical Field]

The present disclosure relates to a battery pack and a manufacturing method thereof. The present application claims the benefit of priority based on Korean Patent Application No. 10-2024-0010445, filed on January 23, 2024 and Korean Patent Application No. 10-2024-0032767, filed on March 7, 2024, and the entire contents of the Korean patent applications are incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. The safety of secondary batteries may be achieved through mechanical robustness, reliability of electrical insulation, and heat transfer delay when a thermal runaway event occurs.

### [Disclosure]

### [Technical Problem]

The present disclosure is directed to providing a battery pack with improved safety and a manufacturing method thereof.

### [Technical Solution]

According to an aspect of the present disclosure, a method of manufacturing a battery pack includes: placing a plurality of battery cell assemblies and an electrical component in a pack housing that includes a base plate, a center beam on the base plate, and first and second cross-beams, in which the center beam is perpendicular to each of the first and second cross-beams; and providing a fire-resistant coating on the plurality of battery cell assemblies by a painting method.

In the providing of the fire-resistant coating on the plurality of battery cell assemblies, the fire-resistant coating may be provided on the second cross-beams.

The method may further include coupling a mask to the pack housing to cover the first cross-beam and the electronic component, before the providing of the fire-resistant coating on the plurality of battery cell assemblies.

In the providing of the fire-resistant coating on the plurality of battery cell assemblies, the fire-resistant coating may not be applied onto the first cross-beam and the electronic component.

The mask may cover a first portion of the center beam and expose a second portion of the center beam.

In the providing of the fire-resistant coating on the plurality of battery cell assemblies, the fire-resistant coating may not be applied onto the first portion of the center beam.

In the providing of the fire-resistant coating on the plurality of battery cell assemblies, the fire-resistant coating may be applied onto the second portion of the center beam.

Embodiments provide a battery pack. The battery pack includes: a pack housing including a base plate and a side wall; a center beam provided on the base plate and extending in a first direction parallel to a mounting surface of the base plate; first and second cross-beams provided on the base plate, in which each of the first and second cross-beams extends in a second direction parallel to the mounting surface of the base plate and perpendicular to the first direction; a plurality of battery cell assemblies on the base plate, in which the plurality of battery cell assemblies are isolated from each other by the center beam and the first and second cross-beams and each include a plurality of battery cells arranged in the first direction, a plurality of pads between the plurality of battery cells, a first integrated circuit assembly with a first integrated circuit electrically connected to the plurality of battery cells, and a second integrated circuit assembly spaced part from the first integrated circuit assembly in the second direction and including a second integrated circuit electrically connected to the plurality of battery cells; an electronic component between the side wall and the first cross-beams; first fire-resistant coatings applied onto the plurality of battery cells of each of the plurality of battery cell assemblies; second fire-resistant coatings applied onto the plurality of pads of each of the plurality of battery cell assemblies; third fire-resistant coatings applied onto the first integrated circuit assembly of each of the plurality of battery cell assemblies; and fourth fire-resistant coatings applied onto the second integrated circuit assembly of each of the plurality of battery cell assemblies.

The battery pack may further include fifth fire-resistant coatings applied onto the second cross-beams.

Each of the first to fifth fire-resistant coatings may include the same material.

The battery pack may further include a sixth fire-resistant coating applied onto the center beam.

The center beam may include a second portion to which the sixth fire-resistant coating is applied and a first portion spaced apart from the second fire-resistant coating, and the first portion may be spaced apart from the second portion in the first direction.

### [Advantageous Effects]

According to embodiments of the present disclosure, a fire-resistant coating can be applied onto a plurality of battery cell assemblies, cross-beams, and a center beam of a battery pack. Accordingly, a thermal runaway event can be prevented from spreading to the surroundings, and the safety of the battery pack can be improved.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a flowchart of a manufacturing method of a battery pack according to embodiments.
FIG. 2 is a plan view for describing a method of manufacturing a battery pack according to embodiments.
FIG. 3 is a cross-sectional view taken along line 2I-2I' of FIG. 2.
FIG. 4 is a cross-sectional view of a battery cell according to embodiments.
FIG. 5 is an exploded perspective view of a battery cell according to embodiments.
FIG. 6 is a plan view for describing a method of manufacturing a battery pack according to embodiments.
FIG. 7 is a plan view for describing a method of manufacturing a battery pack according to embodiments.
FIG. 8 is a cross-sectional view taken along line 7I-7I' of FIG. 7.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First and Second Embodiments)

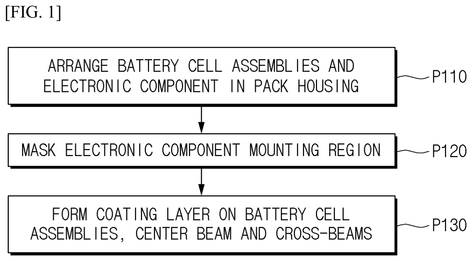

FIG. 1 is a flowchart of a method of manufacturing a battery pack according to embodiments.

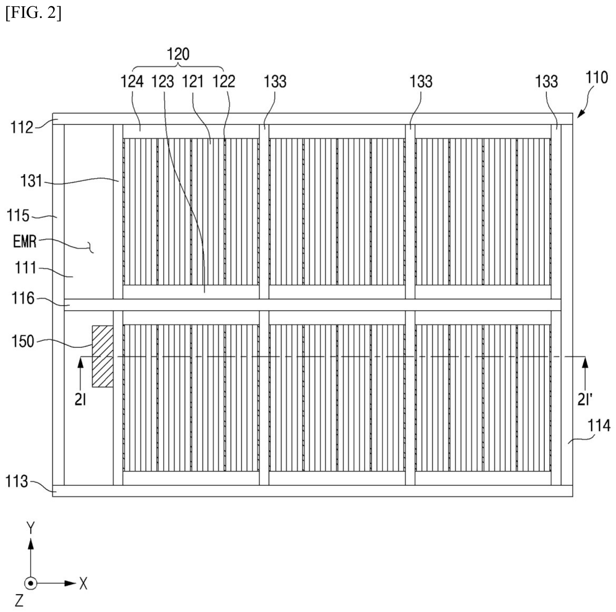

FIG. 2 is a plan view for describing a method of manufacturing a battery pack according to embodiments.

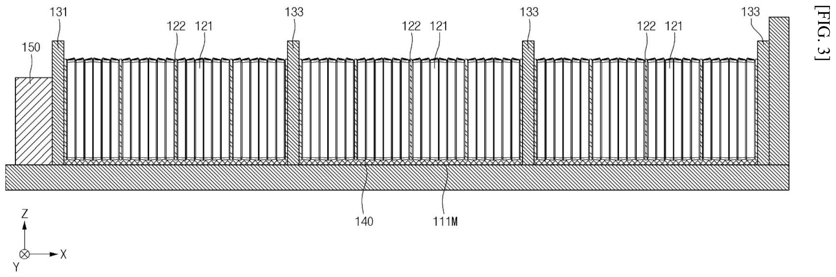

FIG. 3 is a cross-sectional view taken along line 2I-2I' of FIG. 2.

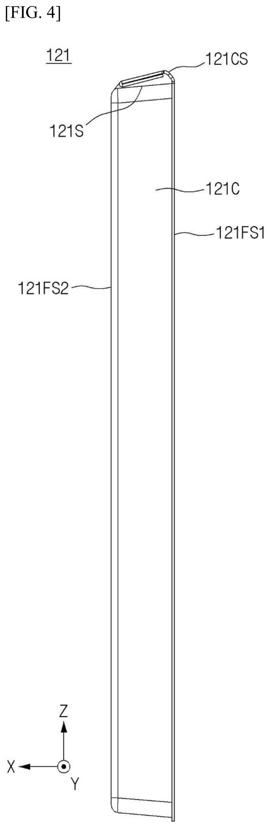

FIG. 4 is a cross-sectional view of a battery cell according to embodiments.

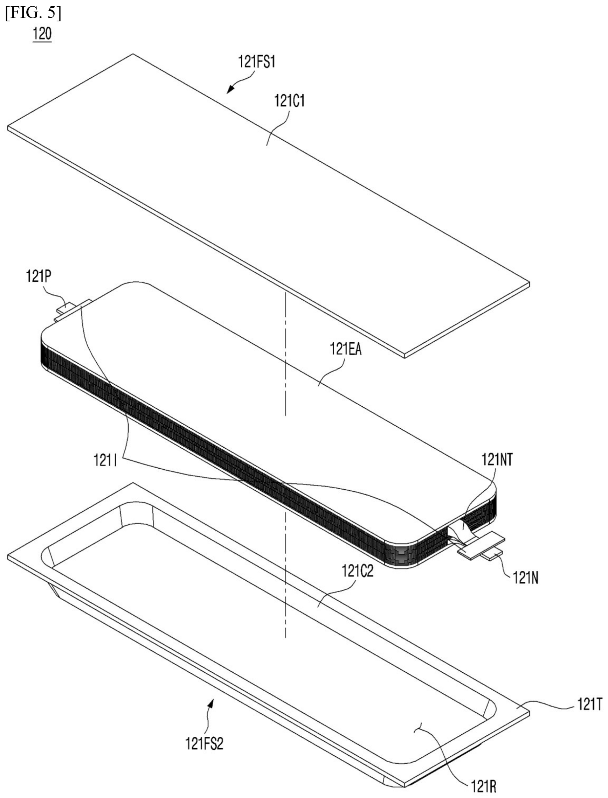

FIG. 5 is an exploded perspective view of a battery cell according to embodiments.

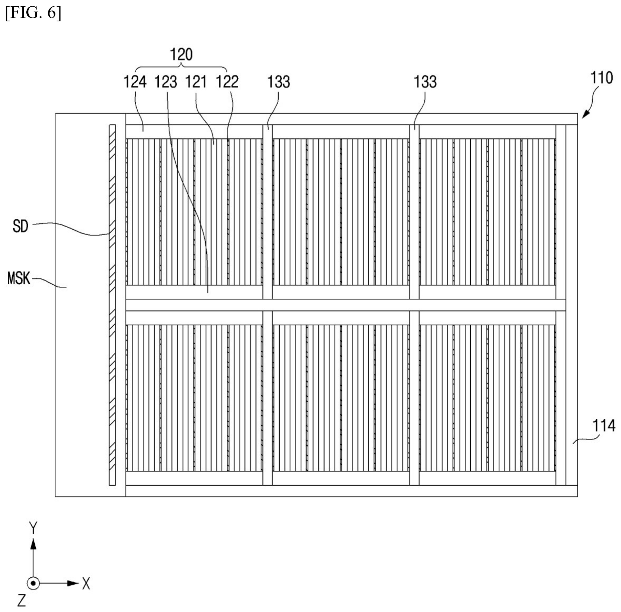

FIG. 6 is a plan view for describing a method of manufacturing a battery pack according to embodiments.

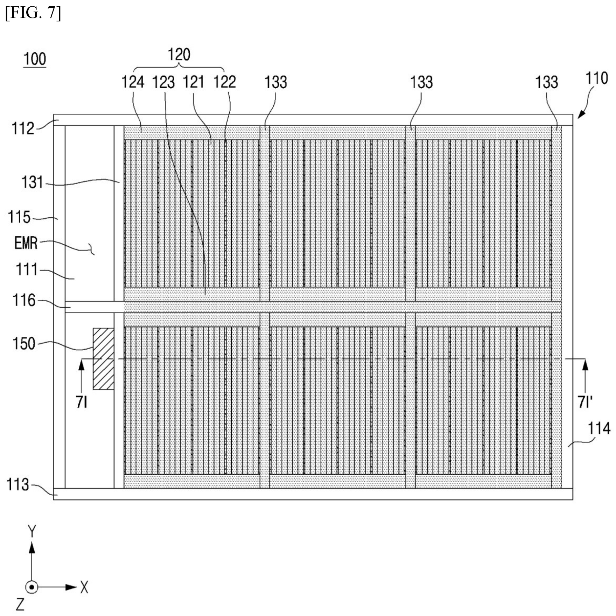

FIG. 7 is a plan view for describing a method of manufacturing a battery pack according to embodiments.

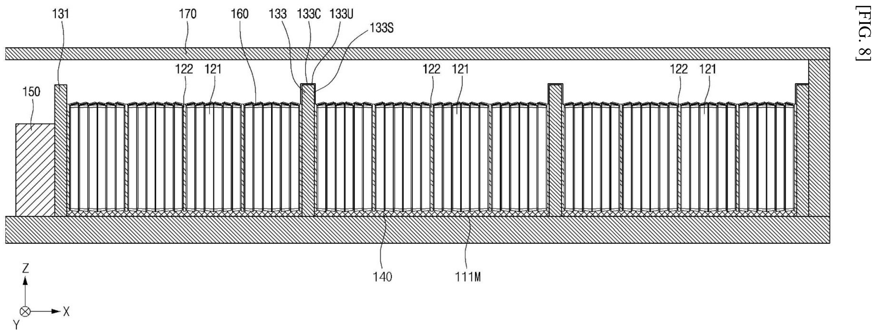

FIG. 8 is a cross-sectional view taken along line 7I-7I' of FIG. 7.

Referring to FIGS. 1 to 3, in P110, a plurality of battery cell assemblies 120 and an electronic component 150 may be placed in a pack housing 110.

The pack housing 110 may provide a space for mounting the plurality of battery cell assemblies 120 and the electronic component 150 therein. The pack housing 110 may include a base plate 111, side walls 112, 113, 114, and 115, and a center beam 116. Cross-beams 131 and 133 may be further provided on the base plate 111.

Here, two directions substantially parallel to a mounting surface 111M of the base plate 111 are defined as an X-axis direction and a Y-axis direction, and a direction substantially perpendicular to the mounting surface 111M of the base plate 111 is defined as a Z-axis direction. The X-axis direction, the Y-axis direction, and the Z-axis direction may be substantially perpendicular to one another. The mounting surface 111M may face the battery cell assemblies 120.

Each of the base plate 111 and the side walls 112 and 113 may be provided by an extrusion process. An extrusion direction of each of the base plate 111 and the side walls 112 and 113 may be the X-axis direction. The side walls 114 and 115 may also be provided by the extrusion process. The side walls 112, 113, 114, and 115 may be substantially perpendicular to the base plate 111.

According to embodiments, the base plate 111 and the side walls 112 and 113 may be coupled by friction stir welding. The base plate 111 may include a plurality of unit plates coupled to each other by friction stir welding.

The center beam 116 may extend in the X-axis direction. The center beam 116 may be interposed between the side walls 112 and 113. The center beam 116 may be included in a center plate that is one of the plurality of unit plates coupled to each other by friction stir welding. Accordingly, the center beam 116 may be formed together with the center plate and be an element integrally formed with the center plate.

The base plate 111 may include a plurality of cooling channels. The plurality of cooling channels may provide a passage for moving, for example, a refrigerant such as water. The plurality of cooling channels may be formed by the extrusion process. The plurality of cooling channels may extend in the X-axis direction. The plurality of cooling channels may be spaced apart from each other in the Y-axis direction.

The plurality of battery cell assemblies 120 may be on the base plate 111 of the pack housing 110. The base plate 111 may support the plurality of battery cell assemblies 120. The side walls 112, 113, 114, and 115 may horizontally surround the plurality of battery cell assemblies 120. The side walls 112, 113, 114, and 115 may protect the plurality of battery cell assemblies 120.

The center beam 116 and the cross-beams 131 and 133 may isolate the plurality of battery cell assemblies 120 from each other. The plurality of battery cell assemblies 120 may be spaced apart from each other in the Y-axis direction with the center beam 116 interposed therebetween. The center beam 116 may be interposed between the plurality of battery cell assemblies 120. The plurality of battery cell assemblies 120 may be spaced apart from each other in the X-axis direction with the cross-beams 131 interposed therebetween. The cross-beams 131 may be interposed between the plurality of battery cell assemblies 120.

In FIG. 2, the plurality of battery cell assemblies 120 may be arranged in a 3x2 array. The arrangement of the plurality of battery cell assemblies 120 of FIG. 2 is a non-limiting example and should not be understood as limiting the technical idea of the present disclosure in any sense. Those of ordinary skill in the art will be able to easily derive the plurality of battery cell assemblies 120 arranged in an MxN array (here, M and N are each an integer of 2 or more), based on the above description.

Each of the plurality of battery cell assemblies 120 may include a plurality of battery cells 121, pads 122, a first integrated circuit assembly 123, and a second integrated circuit assembly 124.

Referring to FIGS. 4 and 5, the battery cell 121 may include a cell case 121C, an electrode assembly 121EA, a positive electrode terminal 121P, and a negative electrode terminal 121N. The battery cell 121 may further include an electrolyte.

According to embodiments, the battery cell 121 may include a cylindrical battery cell, a prismatic battery cell, or a pouch type battery cell. An electrode assembly of the cylindrical battery cell is embedded in the cylindrical metal can. An electrode assembly of the prismatic battery cell is embedded in the prismatic metal can. An electrode assembly of the pouch type battery cell is embedded in a pouch case including an aluminum laminate sheet. Hereinafter, the technical idea of the present disclosure will be described with respect to an example in which the battery cell 121 is a pouch type battery cell but those of ordinary skill in the art will be able to easily derive an example in which the battery cell 121is a cylindrical battery cell or an prismatic battery cell based on the description herein.

The electrode assembly 121EA may include a positive electrode, a negative electrode, and a separator between the positive electrode and the negative electrode. The electrode assembly 121EA may be of a jelly-roll type or stack type. The electrode assembly 121EA that is of the jelly-roll type may include a structure in which a positive electrode, a negative electrode, and a separator between the positive and negative electrodes are wound together. The electrode assembly 121EA that is of the stack type may include a plurality of positive electrodes and a plurality of negative electrodes that are sequentially stacked, and a plurality of separators therebetween.

Each of the plurality of positive electrodes of the electrode assembly 121EA may include a positive electrode tab (not shown). The positive electrode tab of each of the plurality of positive electrodes of the electrode assembly 121 EA may be short-circuited from the positive electrode terminal 121P. The positive electrode tab of each of the plurality of positive electrodes of the electrode assembly 121EA may be welded to the positive electrode terminal 121P.

Each of the plurality of negative electrodes of the electrode assembly 121EA may include a negative electrode tab 121NT. The negative electrode tab 121NT of each of the plurality of negative electrodes of the electrode assembly 121EA may be short-circuited from the negative electrode terminal 121N. The negative electrode tab 121NT of each of the plurality of negative electrodes of the electrode assembly 121 EA may be welded to the negative electrode terminal 121N.

The cell case 121C may include an inner resin layer, a metal layer, and an outer resin layer. An adhesive and an anti-corrosion layer may be further provided between the inner resin layer and the metal layer and between the outer resin layer and the metal layer.

The inner resin layer may have thermal adhesion and be referred to as a sealant layer. The inner resin layer allows sealing of the cell case 121C. The inner resin layer may include, for example, a polyolefin-based resin such as polypropylene (PP) and polyethylene (PE). The metal layer may include an alloy of iron, carbon, chromium and manganese, an alloy of iron, chromium and nickel, or aluminum. The metal layer may be a gas barrier. The metal layer may block the entry and exit of a gas from the cell case 121C. The outer resin layer may be a surface protective layer. The outer resin layer may include a material having wear resistance and heat resistance, such as a nylon resin.

The cell case 121C may be provided by bonding a first cell case 121C1 and a second cell case 121C2. The first cell case 121C1 may be substantially flat. The first cell case 121C1 may not include a receiving part. The second cell case 121C2 may include a receiving part 121R. The receiving part 121R may be formed by a pouch forming process. The receiving part 121R is a part of the second cell case 121C2 that is molded in the form of bowl to accommodate the electrode assembly 121EA therein.

A terrace 121T of the second cell case 121C2 may surround the receiving part 121R. The terrace 121T of the second cell case 121C2 may be bonded to an edge of the first cell case 121C1 to form the cell case 121C. A sealing part 121CS may be provided by bonding the first and second cases 121C1 and 121C2. That is, the sealing part 121CS may be a bonding part of the first and second cases 121C1 and 121C2.

As illustrated in FIG. 2, when a receiving part is formed in only the second cell case 121C2 among the first and second cases 121C1 and 121C2, the sealing part 121CS may be connected to a first main surface 121FS1. The sealing part 121CS may include a portion that is coplanar with the first main surface 121FS1.

The cell case 121C may have a roughly rectangular parallelepiped shape, and the first main surface 121FS1 and a second main surface 121FS2 of the cell case 121C may be widest surfaces of the cell case 121C. The first main surface 121FS1 and the second main surface 121FS2 may be substantially parallel to the electrode assembly 121EA or at least one of the plurality of positive electrodes and the plurality of negative electrodes of the electrode assembly 121EA. The first main surface 121FS1 and the second main surface 121FS2 may be opposite to each other. The first main surface 121FS1 and the second main surface 121FS2 may be substantially perpendicular to the X-axis direction but embodiments are not limited thereto.

An insulating tape 121I may be applied onto the positive electrode terminal 121P and the negative electrode terminal 121N. The positive electrode terminal 121P and the negative electrode terminal 121N may protrude to the outside of the cell case 121C. The positive electrode terminal 121P and the negative electrode terminal 121N may protrude from the cell case 121C in the Y-axis direction. Accordingly, a resulting voltage and current of the battery cell 121 may be output through the positive electrode terminal 121P and the negative electrode terminal 121N. The positive electrode terminal 121P may be a positive electrode lead. The negative electrode terminal 121N may be a negative electrode lead. The Y-axis direction may be substantially perpendicular to the X-axis direction.

Referring back to FIGS. 1 to 3, the plurality of battery cells 121 may be arranged in the X-axis direction. The plurality of battery cells 121 may be coupled to each other via, for example, an adhesive.

The plurality of battery cells 121 may form a plurality of banks. For example, some of the battery cells 121 (e.g., three battery cells 121) may be connected in parallel to each other and form a bank together. The plurality of banks may be connected in series. A resulting connection form of the plurality of battery cells 121 may be referred to as a 3-parallel-16 serial (3P-16S) form but is only an example and should not be understood as limiting the technical idea of the present disclosure in any sense. The number of banks to be connected in series and the number of battery cells 121 to be included in the plurality of banks may be determined according to a voltage and a current to be output from the battery cell assembly 120.

In the present example, two banks may form a unit stack. Unit stacks may alternate with the pads 122. One of the pads 122 may be provided between two of the unit stacks and one of the unit stacks may be provided between two of the pads 122.

Odd-numbered banks are connected in series to even-numbered banks and thus an orientation of the battery cells 121 of the odd-numbered banks may be different from an orientation of the battery cells 121 of the even-numbered banks. The orientation of the battery cells 121 of the odd-numbered banks may be opposite to the orientation of the battery cells 121 of the even-numbered banks. That is, an orientation of the battery cells 121 of the odd-numbered banks when rotated by 180 degrees about the Z-axis may be the same as the orientation of the battery cells 121 of the even-numbered banks. Accordingly, the positive electrode terminals 121P (see FIG. 5) of the battery cells 121 of the odd-numbered banks may be close to the negative electrode terminals 121N (see FIG. 5) of the battery cells 121 of the even-numbered banks, and the positive electrode terminals 121P (see FIG. 5) of the battery cells 121 of the even-numbered banks may be close to the negative electrode terminals 121N (see FIG. 5) of the battery cells 121 of the odd-numbered banks.

The pads 122 may absorb the swelling of the plurality of battery cells 121. Each of the pads 122 may include polyurethane (PU). Each of the pads 122 may include a fire-resistant material such as a silicone. As a non-limiting example, two of the banks may be interposed between adjacent pads 122.

The first integrated circuit assembly 123 may include an insulating frame, an integrated circuit, bus bars, sensing plates, sensing bars, temperature sensors, wires, and an insulating cover. The second integrated circuit assembly 124 may include an insulating frame, an integrated circuit, sensing plates, temperature sensors, wires, and an insulating cover.

The first and second integrated circuit assemblies 123 and 124 may provide electrical connection between the plurality of battery cells 121, output resulting voltages of the plurality of battery cells 121, and include physical and functional components for measuring voltages (or currents) of nodes inside a circuit composed of the plurality of battery cells 121.

The insulating frame may include an insulating material such as plastic. The insulating frame may cover front sides of the plurality of battery cells 121. The insulating frame may support the integrated circuit, the bus bars, the sensing plates, the sensing bars, the temperature sensors, and the wires.

The bus bars may be short-circuited with positive electrode leads 121P of one or more battery cells 121 of a first bank and negative electrode leads 121N of one or more battery cells 121 of a last bank. The bus bars may be welded to the positive electrode leads 121P of the one or more battery cells 121 of the first bank and the negative electrode leads 121N of the one or more battery cells 121 of the last bank. Resulting voltages of the plurality of battery cells 121 of the battery cell assembly 120 may be output through the bus bars. The bus bars may be fixed onto the insulating frame.

The integrated circuit may be mounted on the insulating frame. The positive electrode leads 121P and the negative electrode leads 121N that are welded to each other may form nodes inside the battery cell assembly 120. The integrated circuit may be configured to measure voltages of the nodes through the sensing plates and the sensing bars.

The sensing bars may include a conductive material. The sensing bars may have a rod shape. The sensing bars may be short-circuited with the bus bars. The sensing bars may be coupled to the bus bars. Voltages of the bus bars may be measured through the sensing bars.

Each of the sensing plates may have a patch shape or a pad shape. The sensing plates may include a conductive material. The sensing plates may be short-circuited with corresponding ones of the positive electrode leads 121P and the negative electrode leads 121N of the plurality of battery cells 121.

Each of the sensing plates may be connected to the integrated circuit. Voltages of the nodes inside the battery cell assembly 120 may be measured through the sensing plates.

The temperature sensors may be configured to measure temperatures of a plurality of points on the battery cell assembly 120. The temperature sensors may be spatially distributed and thus a temperature distribution in the battery cell assembly 120 may be measured.

The insulating cover may include an insulating material such as plastic. The insulating cover may be interference-fitted into the insulating frame. The insulating cover may cover the integrated circuit, the bus bars, the sensing plates, the sensing bars, and the temperature sensors and thus electrical elements of the first and second integrated circuit assemblies may be protected.

Each of the plurality of battery cell assemblies may further include a flexible flat cable (FFC) assembly configured to provide an electrical connection between the integrated circuit of the first integrated circuit assembly 123 and the integrated circuit of the second integrated circuit assembly 124. Accordingly, measured values, such as temperatures and voltages, collected from the integrated circuit of the second integrated circuit assembly 124 may be transmitted to the integrated circuit of the first integrated circuit assembly 123 through the FFC assembly. The measured values, such as temperatures and voltages, collected from the integrated circuit of the second integrated circuit assembly 124 may be transmitted to the integrated circuit of the first integrated circuit assembly 123 through wireless communication.

TIM layers 140 may be provided on the base plate 111 of the pack housing 110. The TIM layers 140 may be interposed between each of the plurality of battery cells 121 and the base plate 111. The TIM layers 140 may include a resin composition. The TIM layers 140 may be provided by a thermal resin application process. The TIM layers 140 may mediate heat transfer between each of the plurality of battery cells 121 and the base plate 111.

The electronic component 150 may be on an electronic component mounting region EMR. The electronic component mounting region EMR may be a space between the cross-beams 131 and the side wall 115. The electronic component mounting region EMR may be defined by the base plate 111, the side walls 112, 113, and 116 and the cross-beams 131.

The electronic component 150 may include, for example, a battery management system (BMS). The BMS may be configured to monitor, balance, and control the battery pack 100. The monitoring of the battery pack 100 may include measuring voltages and currents of certain nodes in the plurality of battery cell assemblies 120 and measuring temperatures at set positions in the battery pack 100. The battery pack 100 may include measuring devices for measuring a voltage, a current, and temperature as described above.

The balancing of the battery pack 100 is an operation of reducing a deviation between the plurality of battery cell assemblies 120. The controlling of the battery pack 100 includes preventing overcharging, over-discharging, and overcurrent. Through monitoring, balancing, and controlling, the battery pack 100 may be operated under optimal conditions, thereby preventing a decrease in the lifespan of each of the plurality of battery cell assemblies 120.

The electronic component 150 may include a cooling device, a power relay assembly (PRA), a safety plug, etc. The cooling device may include a cooling fan. The cooling fan may circulate air in the battery pack 100 to prevent overheating of each of the plurality of battery cell assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120 and the external load, when an abnormal voltage such as a voltage surge occurs.

Next, referring to FIGS. 1, 2, and 6, in P120, the electronic component mounting region EMR may be masked. The masking the electronic component mounting region EMR may include coupling a mask MSK to the pack housing 110. The mask MSK may be in contact with the cross-beams 131 and the side walls 112, 113, and 116. The mask MSK may be coupled to the cross-beams 131 and the side walls 112, 113, and 116 by a mechanical method such as bolting or may simply be placed on the cross-beams 131 and the side walls 112, 113, and 116. The mask MSK may cover the electrical component 150 on the electronic component mounting region EMR.

Next, referring to FIGS. 1 and 6 to 8, in P130, fire-resistant coatings 160 may be formed on the plurality of battery cell assemblies 120, the center beam 116, and the cross-beams 133. Accordingly, the battery pack 100 may be provided.

The fire-resistant coatings 160 may be formed by a coating machine SD. The coating machine SD may be configured to provide a coating material. For example, the coating machine SD may include a plurality of nozzles configured to spray the coating material. The coating machine SD may provide the fire-resistant coatings 160 by a scanning method in the X-axis direction. An operation of the coating machine SD may be repeated a plurality of times, and a thickness of the fire-resistant coatings 160 may increase whenever the operation is repeated. For example, when the fire-resistant coatings 160 are formed to a thickness of about 10 µm by operating the coating machine SD once, the fire-resistant coatings 160 may be formed to a thickness of about 40 µm by operating the coating machine SD four times.

The fire-resistant coatings 160 may include a fire-resistant material. The fire-resistant coatings 160 may be provided by a spray type coating agent. The fire-resistant coatings 160 may be provided by a paint type coating agent. The fire-resistant coatings 160 may be provided using a ceramic water-soluble coating agent. The fire-resistant coatings 160 may be provided by spraying, painting, printing, vapor deposition, immersion, spin coating, roller coating, floating coating, curtain coating, sputtering, coextrusion, or the like.

According to embodiments, a melting temperature and/or an ignition point of the fire-resistant coatings 160 may be about 300 °C or higher. According to embodiments, the melting temperature and/or the ignition point of the fire-resistant coatings 160 may be about 600 °C or higher. According to embodiments, the melting temperature and/or the ignition point of the fire-resistant coatings 160 may be about 1000 °C or higher. According to embodiments, the melting temperature and/or the ignition point of the fire-resistant coatings 160 may be about 1500 °C or higher.

According to embodiments, thermal conductivity of the fire-resistant coatings 160 may be about 20 W/mK or less. According to embodiments, the thermal conductivity of the fire-resistant coatings 160 may be about 1 W/mK or less. According to embodiments, the thermal conductivity of the fire-resistant coatings 160 may be about 0.3 W/mK or less. The thermal conductivity of the fire-resistant coatings 160 described above may be measured at room temperature (about 25 °C).

According to embodiments, a thickness of the fire-resistant coatings 160 may be in a range of about 10 µm to about 50 µm. According to embodiments, the thickness of the fire-resistant coatings 160 may be about 15 µm or more. According to embodiments, the thickness of the fire-resistant coatings 160 may be about 20 µm or more. According to embodiments, the thickness of the fire-resistant coatings 160 may be about 25 µm or more. According to embodiments, the thickness of the fire-resistant coatings 160 may be about 100 µm or less. According to embodiments, the thickness of the fire-resistant coatings 160 may be about 90 µm or less. According to embodiments, the thickness of the fire-resistant coatings 160 may be about 90 µm or less. According to embodiments, the thickness of the fire-resistant coatings 160 may be about 80 µm or less. According to embodiments, the thickness of the fire-resistant coatings 160 may be about 70 µm or less. According to embodiments, the thickness of the fire-resistant coatings 160 may be about 60 µm or less. According to embodiments, the thickness of the fire-resistant coatings 160 may be about 50 µm or less. According to embodiments, the thickness of the fire-resistant coatings 160 may be about 40 µm or less. According to embodiments, the thickness of the fire-resistant coatings 160 may be about 30 µm or less.

When the thickness of the fire-resistant coatings 160 increases, the fire-resistance performance of the fire-resistant coatings 160 improves but a thickness increases, and thus, the energy density of a battery device including the battery cell 121, e.g., the battery cell assembly 120 (see FIG. 7), decreases. That is, the thickness of the fire-resistant coatings 160 may be determined based on energy density and fire-resistant performance that are in a trade-off relationship. In the range of thicknesses of the fire-resistant coatings 160 described above, the fire-resistant coatings 160 may prevent an excessive increase in the thickness of the fireproof structure 121F and provide sufficient fire-resistant performance to the fireproof structure 121F.

The battery pack 100 may further include a plurality of inter-bus bars configured to electrically connect the plurality of battery cell assemblies 120. The plurality of battery cell assemblies 120 may be connected in series via the plurality of inter-bus bars. Accordingly, the battery pack 100 may be configured to output a high voltage to an external load (e.g., a motor of a vehicle).

The battery pack 100 may further include a lid 170 coupled to the side walls 112, 113, 114, and 115 of the pack housing 110. In FIG. 7, the lid 170 is omitted to clarify a positional relationship between components of the battery pack 100. The lid 170 may cover elements, such as the battery cell assemblies 120 and electronic components, inside the battery pack 100. The lid 170 may be fixed onto the pack housing 110 by a mechanical coupling means such as bolting.

The battery pack 100 may further include exhaust devices coupled to the side walls 114 and 115. One of the side walls 114 and 115 may include exhaust holes connected to the exhaust devices. The exhaust devices may be configured to delay thermal propagation by discharging a high-temperature gas from the inside of the battery pack 100 to the outside when a thermal runaway event occurs in the plurality of battery cell assemblies 120.

Here, the thermal runaway event of the plurality of battery cell assemblies 120 is a state in which a change of temperature of the plurality of battery cell assemblies 120 accelerates the change of temperature, and is uncontrollable positive feedback. A temperature of the plurality of battery cell assemblies 120 that are in a thermal runaway state sharply increases, and a large amount of a high-pressure gas and combustion debris are discharged therefrom.

The fire-resistant coatings 160 may not be applied to the cross-beams 131 and the electronic component 150 that are covered with the mask MSK. Accordingly, malfunction of the electronic component 150 required to be operated precisely may be prevented owing to the application of the fire-resistant coatings 160, thereby improving the reliability of the battery pack 100.

The center beam 116 may include a first portion to which the fire-resistant coatings 160 are not applied and a second portion to which the fire-resistant coatings 160 are applied. The first portion of the center beam 116 may be on the electronic component mounting region EMR. That is, the first portion of the center beam 116 may be between the side wall 115 and the first cross-beams 131 in the X-axis direction. The second portion of the center beam 116 may be interposed between the plurality of battery cell assemblies 120.

The fire-resistant coatings 160 may be applied to each of the cross-beams 133. The fire-resistant coatings 160 may be applied to an upper portion of each of the cross-beams 133. The fire-resistant coatings 160 may be applied to an upper surface 133U of each of the cross-beams 133. The upper surface 133U of each of the cross-beams 133 may be substantially perpendicular to the Z-axis direction. The fire-resistant coatings 160 may be also applied to an upper portion of a side wall 133S of each of the cross-beams 133. The upper surface 133U of each of the cross-beams 133 may be substantially perpendicular to the X-axis direction.

Each of the fire-resistant coatings 160 applied on the plurality of battery cells 121 may be referred to as a first fire-resistant coating. Each of the fire-resistant coatings 160 applied on the plurality of pads 122 may be referred to as a second fire-resistant coating. Each of the fire-resistant coatings 160 applied on the first integrated circuit assembly 123 may be referred to as a third fire-resistant coating. Each of the fire-resistant coatings 160 applied on the second integrated circuit assembly 124 may be referred to as a fourth fire-resistant coating. Each of the fire-resistant coatings 160 applied on the second cross-beams 133 may be referred to as a fifth fire-resistant coating. The fire-resistant coatings 160 applied on the center beam 116 may be referred to as sixth fire-resistant coatings. According to embodiments, the fire-resistant coatings 160 applied to the plurality of battery cells 121, the plurality of pads 122, the first integrated circuit assembly 123, the second integrated circuit assembly 124, the center beam 116, and the second cross-beams 133 may be formed simultaneously and include the same material.

The fire-resistant coatings 160 may be applied to elements of each of the plurality of battery cell assemblies 120. More specifically, the fire-resistant coatings 160 may be applied to a portion (e.g., upper portion) of each of the plurality of battery cells 121 and a portion (e.g., upper portion) of each of the pads 122. The upper portion of each of the plurality of battery cells 121 and the upper portion of each of the pads 122 may face the lid 170.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A method of manufacturing a battery pack, comprising:
placing a plurality of battery cell assemblies and an electrical component in a pack housing, wherein the pack housing includes a base plate, a center beam on the base plate, and first and second cross-beams, and the center beam is perpendicular to each of the first and second cross-beams; and
providing a fire-resistant coating on the plurality of battery cell assemblies by a painting method.

2. The method of claim 1, wherein, in the providing of the fire-resistant coating on the plurality of battery cell assemblies, the fire-resistant coating is provided on the second cross-beams.

3. The method of claim 1, further comprising coupling a mask to the pack housing to cover the first cross-beam and the electronic component, before the providing of the fire-resistant coating on the plurality of battery cell assemblies.

4. The method of claim 3, wherein, in the providing of the fire-resistant coating on the plurality of battery cell assemblies, the fire-resistant coating is not applied onto the first cross-beam and the electronic component.

5. The method of claim 3, wherein the mask covers a first portion of the center beam and exposes a second portion of the center beam.

6. The method of claim 5, wherein, in the providing of the fire-resistant coating on the plurality of battery cell assemblies, the fire-resistant coating is not applied onto the first portion of the center beam.

7. The method of claim 5, wherein, in the providing of the fire-resistant coating on the plurality of battery cell assemblies, the fire-resistant coating is applied onto the second portion of the center beam.

8. A battery pack comprising:
a pack housing including a base plate and a side wall;
a center beam on the base plate, wherein the center beam extends in a first direction parallel to a mounting surface of the base plate;
first and second cross-beams on the base plate, wherein each of the first and second cross-beams extends in a second direction parallel to the mounting surface of the base plate and perpendicular to the first direction;
a plurality of battery cell assemblies on the base plate, wherein the plurality of battery cell assemblies are isolated from each other by the center beam and the first and second cross-beams and each include a plurality of battery cells arranged in the first direction, a plurality of pads between the plurality of battery cells, a first integrated circuit assembly with a first integrated circuit electrically connected to the plurality of battery cells, and a second integrated circuit assembly spaced part from the first integrated circuit assembly in the second direction and including a second integrated circuit electrically connected to the plurality of battery cells;
an electronic component between the side wall and the first cross-beams;
first fire-resistant coatings applied onto the plurality of battery cells of each of the plurality of battery cell assemblies;
second fire-resistant coatings applied onto the plurality of pads of each of the plurality of battery cell assemblies;
third fire-resistant coatings applied onto the first integrated circuit assembly of each of the plurality of battery cell assemblies; and
fourth fire-resistant coatings applied onto the second integrated circuit assembly of each of the plurality of battery cell assemblies.

9. The battery pack of claim 8, further comprising fifth fire-resistant coatings applied onto the second cross-beams.

10. The battery pack of claim 9, wherein each of the first to fifth fire-resistant coatings includes the same material.

11. The battery pack of claim 10, further comprising a sixth fire-resistant coating applied onto the center beam.

12. The battery pack of claim 10, wherein the center beam includes a second portion to which the sixth fire-resistant coating is applied and a first portion spaced apart from the second fire-resistant coating, wherein the first portion is spaced apart from the second portion in the first direction.
